# EUROPÄISCHE PATENTANMELDUNG

(11) **EP 4 462 683 A1**
(43) Veröffentlichungstag der Anmeldung: **13.11.2024**
(21) Anmeldenummer: 23173121.7
(22) Anmeldetag: 12.05.2023
(51) Int. Cl.: H03K 19/177, H03K 19/17748, G06F 15/78, G06F 30/343

(54) **SICHERUNG EINES REKONFIGURIERBAREN VERARBEITUNGSSYSTEMS**

(71) Anmelder: Siemens AG Österreich, 1210 Wien (AT)
(72) Erfinder: Fischer, Bernhard, 2122 Wolkersdorf im Weinviertel (AT); Cech, Christian, 2483 Ebreichsdorf (AT); Chilku, Bekim, 1190 Wien (AT); Hinterstoisser, Thomas, 2102 Bisamberg (AT); Matschnig, Martin, 3430 Tulln (AT)
(74) Vertreter: Siemens Patent Attorneys

(57) **Zusammenfassung**

Ein Verarbeitungssystem (100) umfasst rekonfigurierbare Logik (110), die auf der Basis von Konfigurationsdaten so verschaltet werden kann, dass sich eine erste (320) und eine zweite Funktionskomponente (325) ergeben, die mittels einer ersten Signalleitung (215) und einer zweiten Signalleitung (220) miteinander verbunden sind. Dabei ist zwischen der ersten Funktionskomponente (320) und der ersten Signalleitung (215) eine erste Verzögerungsschaltung (335) und zwischen der zweiten Signalleitung (220) und der zweiten Funktionskomponente (325) eine zweite Verzögerungsschaltung (335) gebildet, wobei Verzögerungszeiten der Verzögerungsschaltungen (335) gleich sind.

## Beschreibung

Die vorliegende Erfindung betrifft die Sicherung eines rekonfigurierbaren Verarbeitungssystems. Insbesondere betrifft die Erfindung den Schutz von Konfigurationsdaten eines solchen Verarbeitungssystems.

Ein Verarbeitungssystem umfasst rekonfigurierbare Logik, die auf der Basis von Konfigurationsdaten so verschaltet werden kann, dass sich vorbestimmte Funktionskomponenten ergeben, um eine vorbestimmte Aufgabe zu erfüllen. Die Funktionskomponenten können mittels Signalleitungen miteinander verbunden sein, sodass sie in ihren Funktionen miteinander synchronisiert werden und einen größeren Funktionskomplex bilden können. Derartig gebildete Funktionskomponenten können insbesondere dazu verwendet werden, von außen eingehende elektrische Signale mit hoher Geschwindigkeit zu verarbeiten. Durch die Konfiguration der Funktionskomponenten in Abhängigkeit einer zu lösenden Aufgabe kann eine erzielbare Bearbeitungsgeschwindigkeit sehr hoch sein.

Konfigurationsdaten eines solchen Verarbeitungssystems können vor ihrer Übertragung auf ein anderes Verarbeitungssystem verschlüsselt werden, um eine Veränderung, eine Analyse oder einen unzulässigen Einsatz von Teilen an anderer Stelle zu unterbinden. Allerdings kann eine solche Verschlüsselung mit geeigneten Mitteln auch ausgehebelt werden. Außerdem kann es beispielsweise zur Kooperation unterschiedlicher Entwicklerteams für dasselbe Verarbeitungssystem vorteilhaft sein, auf eine Verschlüsselung zu verzichten.

Eine der vorliegenden Erfindung zu Grunde liegende Aufgabe besteht in der Bereitstellung einer verbesserten Technik zum Schutz einer Konfiguration eines rekonfigurierbaren Verarbeitungssystems. Die Erfindung löst diese Aufgabe mittels der Gegenstände der unabhängigen Ansprüche. Unteransprüche geben bevorzugte Ausführungsformen wieder.

Ein vorgeschlagenes Verarbeitungssystem umfasst rekonfigurierbare Logik, die auf der Basis von Konfigurationsdaten so verschaltet werden kann, dass sich eine erster und eine zweite Funktionskomponente ergeben, die mittels einer ersten Signalleitung und einer zweiten Signalleitung miteinander verbunden sind. Dabei ist zwischen der ersten Funktionskomponente und der ersten Signalleitung eine erste Verzögerungsschaltung und zwischen der zweiten Signalleitung und der zweiten Funktionskomponente eine zweite Verzögerungsschaltung gebildet, wobei Verzögerungszeiten der Verzögerungsschaltungen gleich sind.

Die Funktionskomponenten können in ihren Funktionen mittels Signalen auf den Signalleitungen miteinander synchronisiert sein. Ein Signal auf der ersten Signalleitung kann auf ein Signal auf der zweiten Signalleitung bezogen sein oder umgekehrt. Durch das asymmetrische Verzögern des ersten und des zweiten Signals auf unterschiedlichen Seiten der Signalleitungen kann ein zeitlicher Zusammenhang zwischen dem Signal auf den Signalleitungen anders erscheinen, als er für die Verarbeitung durch die beiden Funktionskomponenten besteht. Sollte eine der Funktionskomponenten in einem anderen Kontext in gleicher Weise aufgebaut werden, so kann sie eine vorbestimmte Funktion auf Grund des nun gestörten zeitlichen Zusammenhangs der Signale nicht korrekt erfüllen.

Eine unzulässige Weitergabe, eine Analyse, ein Nachvollziehen oder Übertragen von Konfigurationsdaten oder Teilen davon auf ein anderes Verarbeitungssystem bzw. zur Anwendung bei der Lösung einer anderen Aufgabe können dadurch erschwert sein. Ein geistiges Eigentum, das den Konfigurationsdaten zu Grunde liegt, kann verbessert geschützt sein. Haftungs- oder Gewährleitungsansprüche auf der Basis von unzulässig verwendeten Konfigurationsdaten können nicht entstehen. Eine Sicherheit des Verarbeitungssystems gegenüber von extern eingebrachten Funktionskomponenten kann erhöht sein.

In einer Ausführungsform kann eine der Verzögerungsschaltungen entfallen, wenn das entsprechende Signal bereits im Rahmen der Funktionskomponente eine vorbestimmte Verzögerung aufweist. Es ist jedoch bevorzugt, dass die Verzögerungsschaltungen dediziert auf der Basis der Konfigurationsdaten gebildet sind. So kann die laufzeitbasierte Sicherung der Konfigurationsdaten unabhängig von Funktionen der Funktionskomponenten ausgelegt werden. Eine Korrektur eines möglicherweise verzögerten Signals mit klassischen Methoden kann zusätzlich erfolgen.

Es ist außerdem bevorzugt, dass die Funktionen der Funktionskomponenten mittels auf den Signalleitungen übertragenen Signalen aufeinander abgestimmt sind. Übertragungsrichtungen der Signalleitungen können gleich oder einander entgegen gerichtet sein. In einer Ausführungsform kann einer der Funktionskomponenten ein Signal bereitstellen, das mit dem anderen Signal synchronisiert ist. Die Signale umfassen bevorzugt digitale Signale, wobei ein Wechsel zwischen logischen Pegeln eines der Signale in einem vorbestimmten zeitlichen Zusammenhang mit einem korrespondierenden logischen Wechsel des anderen Signals stehen kann.

In einer Ausführungsform ist eine der Verzögerungsschaltungen mittels einer dritten Funktionskomponente realisiert, die mittels Signalleitungen an die erste und die zweite Funktionskomponente angebunden ist. In dieser Ausführungsform kann die dritte Funktionskomponente nach Art eines Schlüssels die korrekte Verzögerung eines der Signale übernehmen. Das andere Signal kann seitens der ersten Funktionskomponente verzögert und direkt an die zweite Funktionskomponente bereitgestellt sein. Die zweite Funktionskomponente kann nur dann korrekt arbeiten, wenn die Verzögerung des ihm direkt von der ersten Funktionskomponente bereitgestellten ersten Signals mit der Verzögerung des zweiten Signals durch die dritte Funktionskomponente übereinstimmt.

In dieser Konstellation können die erste und die zweite Funktionskomponente auch miteinander integriert ausgeführt sein. Das erste Signal kann auf diese Weise zwar verzögert, aber nicht nach außen exponiert werden. Das zweite Signal hingegen kann auf dem Weg zu und von der dritten Funktionskomponente beobachtet werden.

Weiter bevorzugt umfasst das Verarbeitungssystem einen Speicher für die Konfigurationsdaten. Dabei ist das Verarbeitungssystem bevorzugt dazu eingerichtet, die Logik auf der Basis der abgespeicherten Konfigurationsdaten zu konfigurieren. Eine derartige Ausführungsform wird auch FPGA genannt. Eine Konfiguration des Verarbeitungssystems kann ereignisgesteuert erfolgen, beispielsweise immer dann, wenn das Verarbeitungssystem eingeschaltet wird. Die rekonfigurierbare Logik kann auch persistent sein, sodass das Umsetzen der Konfigurationsdaten nur bei Bedarf erfolgen kann. Die Konfigurationsdaten können aus dem Speicher ausgelesen werden. Durch eine hierin beschriebene Technik können die Konfigurationsdaten trotzdem gegen unerlaubtes Kopieren, Verändern, Analysieren oder Verbreiten verbessert geschützt sein.

In einer Ausführungsform ist eine Definition der durch die erste Verzögerungsschaltung bewirkten Verzögerung in den Konfigurationsdaten unabhängig von einer Definition der durch die zweite Verzögerungsschaltung bewirkten Verzögerung. Anders ausgedrückt können Definitionen für die beiden Verzögerungsschaltungen an unterschiedlichen Stellen in den Konfigurationsdaten zu finden sein. Eine zufällige oder beabsichtigte Übernahme beider Verzögerungszeiten kann dadurch erschwert sein.

Diese Ausführungsform kann insbesondere vorteilhaft in Verbindung mit einem FPGA verwendet werden, das rekonfigurierbare logische Zellen umfasst, die unabhängig voneinander konfiguriert werden können. In Abhängigkeit des Verarbeitungssystems kann eine solche Zelle beispielsweise eine programmierbare Komponente wie eine Zuordnungstabelle, Register, Multiplexer oder logische Operatoren bilden. Die Konfigurationsdaten können in Abschnitte unterteilt sein, wobei jeweils ein Abschnitt einer Zelle der rekonfigurierbaren Logik zugeordnet ist. Konfigurationsdaten einer Zelle können leicht identifiziert werden, sind aber durch die gebildete Verzögerungsschaltung gegen Transfer in ein anderes System geschützt.

Es ist zu beachten, dass in einer weiteren Ausführungsform eine der Funktionskomponenten fest vorgegeben sein kann und nicht durch die Konfiguration gebildet sein muss. Eine solche Komponente kann beispielsweise einen Speicher, einen digitalen Signalprozess oder einen Taktgenerator umfassen.

Es ist weiter bevorzugt, dass das Verarbeitungssystem eine außerhalb der rekonfigurierbaren Logik gebildete programmierbare Verarbeitungseinrichtung umfasst. Die Verarbeitungseinrichtung kann insbesondere eine CPU mit einem oder mehreren Rechenkernen umfassen. Optional bildet die Verarbeitungseinrichtung eine der hierin beschriebenen Funktionskomponenten.

Es ist außerdem bevorzugt, dass die Verarbeitungseinrichtung auf einen vorbestimmten Bereich der Logik lesend und/oder schreibend zugreifen kann. So kann die Verarbeitungseinrichtung ein Signal von einer der Funktionskomponenten übernehmen oder einer der Funktionskomponenten ein Signal bereitstellen. In manchen Ausführungsformen kann die Verarbeitungseinrichtung zusätzlich auf einen konfigurierbaren Teil eine gebildeten Funktionskomponente zugreifen. Beispielsweise kann eine Funktionskomponente ein Register umfassen, in welches die Verarbeitungseinrichtung einen Wert schreiben kann, sodass eine Funktion der Funktionskomponente durch den geschriebenen Wert beeinflusst wird. In einer Ausführungsform kann dieser Wert eine Verzögerungszeit einer der Verzögerungsschaltungen steuern.

Eine Verzögerungsschaltung kann auf unterschiedliche Weisen gebildet werden. In einer Ausführungsform umfasst eine Verzögerungsschaltung einen Taktteiler oder einen Taktgenerator. In einer anderen Ausführungsform ist eine Verzögerungsschaltung als vordefiniertes Element verfügbar, das auf eine vorbestimmte Verzögerungszeit programmiert bzw. konfiguriert werden kann.

Die Logik des Verarbeitungssystems kann eine große Vielzahl gleichförmiger Logikelemente (sea of gates) umfassen, die durch die Konfigurationsdaten miteinander verschaltet werden können.

Es ist jedoch bevorzugt, dass die Logik auch vordefinierte Funktionskomponenten umfasst. Insbesondere kann eine Verzögerungsschaltung durch ein vordefiniertes Logikelement gebildet sein. Eine Verzögerungszeit kann dabei entweder im Rahmen der Konfiguration oder durch Beschreiben eines vorbestimmten Speichers oder Registers zur Laufzeit konfiguriert werden.

Das Verarbeitungssystem kann insbesondere ein SoC (System-on-Chip) oder ein SoM (System-on-Module) umfassen. Dabei kann das Verarbeitungssystem praktisch alle erforderlichen Funktionskomponenten zur Bildung eines Computersystems umfassen. Dazu können eine Verarbeitungseinrichtung, Speicher und Schnittstellen zählen. Das Verarbeitungssystem kann nur noch mit einer Schnittstelle und einer Stromversorgung verbunden werden, um eine vorbestimmte Funktion auszufüllen.

Ein Computerprogrammprodukt umfasst Konfigurationsdaten zur Konfiguration eines hierin beschriebenen Verarbeitungssystems. Die Konfigurationsdaten können zur Konfiguration des Verarbeitungssystems verwendet werden. Ein Datenträger kann die Konfigurationsdaten bzw. ein hierin beschriebenes Computerprogrammprodukt enthalten.

Nach einem weiteren Aspekt der vorliegenden Erfindung ist ein Verfahren zum Synchronisieren einer ersten Funktionskomponente und einer zweiten Funktionskomponente eines Verarbeitungssystems mit rekonfigurierbarer Logik vorgesehen. Die Funktionskomponenten sind auf der Basis von Konfigurationsdaten aus der Logik verschaltet und mittels einer ersten Signalleitung und einer zweiten Signalleitung miteinander verbunden. Das Verfahren umfasst Schritte des Bereitstellens eines ersten Signals durch die erste Funktionskomponente; des Verzögerns des ersten Signals um einen vorbestimmten Betrag; des Übermittelns des verzögerten ersten Signals mittels der ersten Signalleitung an die zweite Funktionskomponente; des Bereitstellens eines zweiten Signals durch die zweite Funktionskomponente, wobei das zweite Signal in einem vorbestimmten zeitlichen Zusammenhang mit dem verzögerten ersten Signal steht; des Übermittelns des zweiten Signals an die erste Funktionskomponente; des Verzögerns des zweiten Signals um denselben vorbestimmten Betrag; und des Auswertens des verzögerten ersten Signals im Zusammenhang mit dem verzögerten zweiten Signal.

Das Verfahren kann insbesondere mittels eines hierin beschriebenen Verarbeitungssystems ausgeführt werden. Außerdem kann das Verfahren durch ein Computerprogrammprodukt bzw. durch Konfigurationsdaten für ein hierin beschriebenes Verarbeitungssystem repräsentiert sein. Merkmale oder Vorteile des Verfahrens können auf das Verarbeitungssystem übertragen werden oder umgekehrt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- Figur 1: ein partiell rekonfigurierbares Verarbeitungssystem;
- Figur 2: eine Verbindung zweier durch verschaltete Logik gebildeter Funktionskomponenten eines Verarbeitungssystems;
- Figur 3: verschiedene Verschaltungen von Funktionskomponenten einer rekonfigurierbaren Logik; und
- Figur 4: ein Ablaufdiagramm eines Verfahrens zur Erstellung einer Hardware-Applikation auf der Basis eines partiell rekonfigurierbaren Verarbeitungssystems
darstellt.

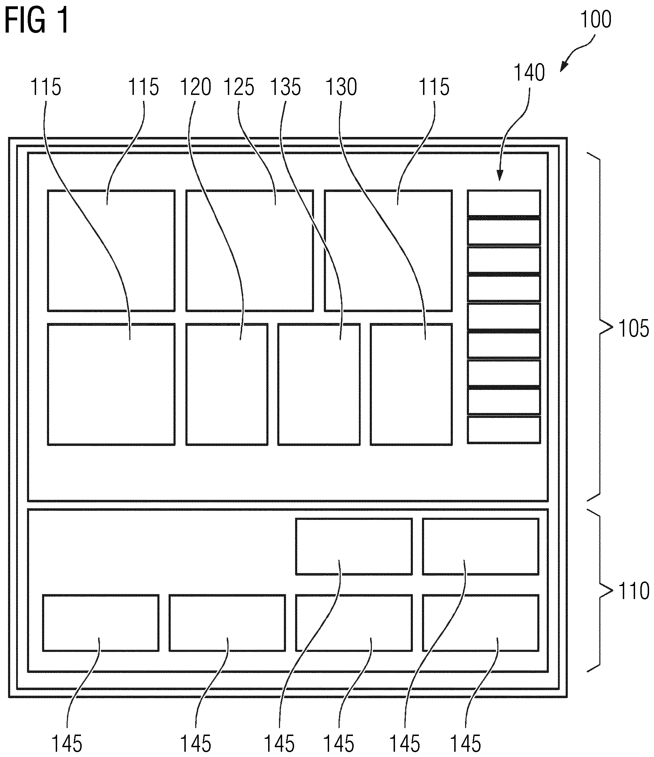

Figur 1 zeigt ein beispielhaftes partiell rekonfigurierbares Verarbeitungssystem 100. Das Verarbeitungssystem 100 umfasst ein Rechensystem 105 und eine rekonfigurierbare Logik 110. Das Rechensystem 105 umfasst Komponenten, mit denen ein funktionsfähiges Verarbeitungssystem bereits vollständig oder zumindest teilweise aufgebaut werden kann. In der dargestellten Ausführungsform umfasst das Rechensystem einen oder mehrere Prozessoren 115, eine Verwaltungseinheit 120, Speicher 125, eine Systemsteuerung 130 und eine Konfigurationseinheit 135. Außerdem können verschiedene Schnittstellen 140 vorgesehen sein. Beispielhafte Schnittstellen 140 umfassen DisplayPort, USB, SATA, PCIe, Ethernet, CAN, SPI, Steuerdatei/eMMC oder Flash-Speicher.

Die rekonfigurierbare Logik 110 ist üblicherweise in Zellen oder Container unterteilt, die jeweils unabhängig voneinander konfiguriert werden können. So können Funktionsblöcke oder Funktionskomponenten 145 erstellt werden, die untereinander, mit dem Rechensystem 105 oder einer Schnittstelle des Verarbeitungssystems 100 nach außen verbunden werden können. Beispielhafte Funktionskomponenten 145 umfassen 16G und 33G Transceiver, eine PCIe-Schnittstelle, Ultraram, 100G Ethernet, einen Video Codec oder eine schnelle Interlaken-Schnittstelle.

Eine Konfiguration eines Containers in eine Funktionskomponente 145, seine Verschaltung mit einer anderen Funktionskomponente 145, dem Rechensystem 105 oder einer externen Schnittstelle 140 kann durch die Konfigurationseinheit 135 gesteuert werden. Konfigurationsdaten hierzu können in der Konfigurationseinheit 135, einem dedizierten Flash-Speicher oder dem Speicher 125 abgelegt sein. Diese Konfigurationsdaten können mit einem entsprechenden Werkzeug in das Verarbeitungssystem 100 geschrieben werden.

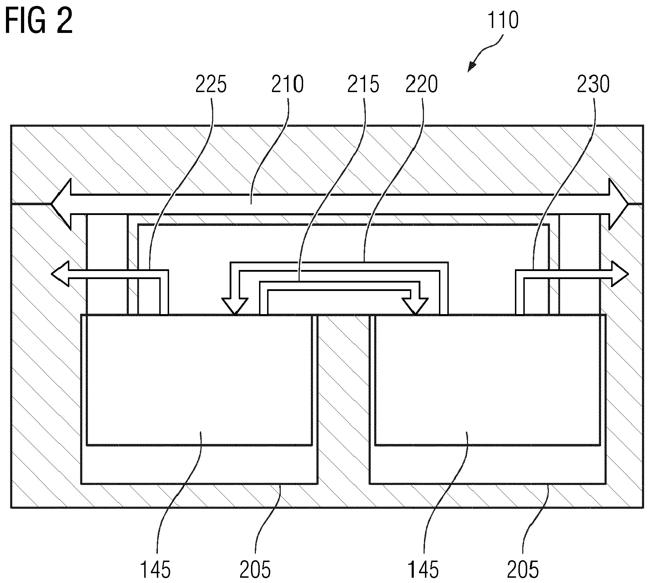

Figur 2 zeigt eine beispielhafte Verbindung zweier durch konfigurierte Logik 110 gebildete Funktionskomponenten 145. Die rekonfigurierbare Logik 110 umfasst eine Anzahl Container 205, in denen jeweils eine Funktionskomponente 145 ausgebildet werden kann. Die Container 205 bzw. Funktionskomponenten 145 können mittels eines Verbindungspfads 210 Signale miteinander austauschen. Durch entsprechende Konfiguration der Logik 110 können zwischen den dargestellten Funktionskomponenten 145 beispielsweise eine erste Signalleitung 215 zur Übermittlung eines ersten Signals und eine zweite Signalleitung 220 zur Übermittlung eines zweiten Signals ausgebildet werden. Das erste Signal läuft in der Darstellung von Figur 2 beispielhaft von der linken zur rechten Funktionskomponente 145, während das zweite Signal in entgegengesetzter Richtung läuft. Es ist zu beachten, dass in entsprechender Weise noch weitere Signalleitungen zur Übermittlung weiterer Signale ausgebildet werden können. Beispielhaft dargestellt in Figur 2 sind noch eine dritte Signalleitung 225 und eine vierte Signalleitung 230.

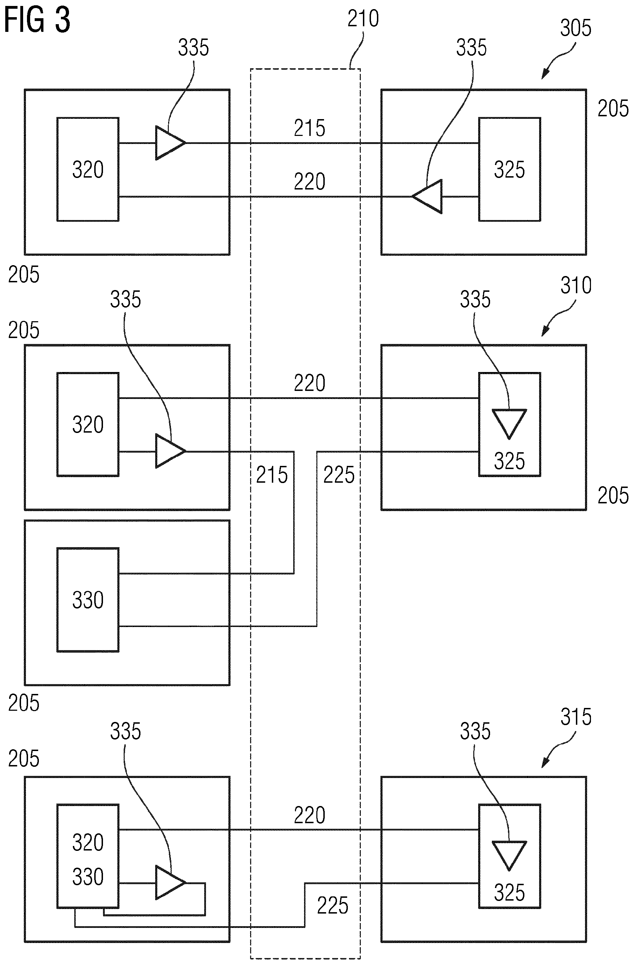

Figur 3 zeigt beispielhafte Verschaltungen von Funktionskomponenten 145 in einer rekonfigurierbaren Logik 110. Von oben nach unten sind eine erste Verschaltung 305, eine zweite Verschaltung 310 und eine dritte Verschaltung 315 dargestellt. Alle dargestellten Verschaltungen 305 bis 315 benutzen denselben Verbindungspfad 210, sind aber elektrisch und logisch vollständig voneinander getrennt.

Die erste Verschaltung 305 umfasst eine erste Funktionskomponente 320 und eine zweite Funktionskomponente 325, die in unterschiedlichen Containern 205 aufgenommen sind. Die Funktionskomponenten 320 und 325 sind mittels einer ersten Signalleitung 215 und einer zweiten Signalleitung 220 miteinander verbunden. Dabei ist zwischen der ersten Funktionskomponente 320 und der ersten Signalleitung 215 eine Verzögerungsschaltung 335 vorgesehen, die ein zu übertragendes Signal um eine vorbestimmte Zeit verzögert. In entsprechender Weise ist zwischen der zweiten Signalleitung 220 und der zweiten Funktionskomponente 325 eine weitere Verzögerungsschaltung 335 vorgesehen, welche dieselbe Funktion erfüllt. Die Verzögerungsschaltungen 335 können jeweils Teil der zugeordneten Funktionskomponente 320, 325 sein. Verzögerungszeiten beider Verzögerungsschaltungen 335 sind bevorzugt gleich.

Die Funktionskomponenten 320, 325 können mittels Signalen über die Signalleitungen 215, 220 miteinander synchronisiert werden. Beispielsweise kann die erste Funktionskomponente 320 über die erste Signalleitung 215 ein periodisches Taktsignal bereitstellen. Auf der zweiten Signalleitung 220 kann sie Datensignale anlegen, die auf das Taktsignal bezogen sind. Beispielsweise kann ein Pegel auf der zweiten Signalleitung 220 immer dann gültig sein, wenn die erste Signalleitung ihren Pegel in einer vorbestimmten Weise ändert, beispielsweise mit einer steigenden oder fallenden Flanke.

Auf dem Verbindungspfad 210 kann ein zeitlicher Zusammenhang zwischen den Takt- und Datensignalen in verzerrter Form vorliegen. Eine Analyse der Signale kann daher schwierig sein und zu falschen Ergebnissen führen. Die Funktionskomponenten 320, 325 können nur korrekt zusammenarbeiten, wenn beide die dargestellten Verzögerungsschaltungen 335 korrekt implementieren. Sollte beispielsweise die zweite Funktionskomponente 325 in einem anderen Umfeld eingesetzt werden, sodass sie mit unverzerrten Takt- und Datensignalen versorgt wird, so würde die Verzögerungsschaltung 335 dazu führen, dass die zweite Funktionskomponente 325 verfälschte Daten liest.

Die zweite Verschaltung 310 umfasst eine erste Funktionskomponente 320, eine zweite Funktionskomponente 325 und eine dritte Funktionskomponente 330, die jeweils in unterschiedlichen Containern 205 gebildet sind. Die erste Funktionskomponente 320 umfasst eine Verzögerungsschaltung 335 zur ersten Signalleitung 215, die zur dritten Funktionskomponente 330 führt. Eine zweite Signalleitung 220 führt direkt von der ersten Funktionskomponente 320 zur zweiten Funktionskomponente 325. Die zweite Funktionskomponente 325 realisiert eine weitere Verzögerungsschaltung 335, ihr Ausgangssignal wird mittels der dritten Signalleitung 225 an die dritte Funktionskomponente 330 übermittelt.

In dieser Ausführungsform kann die erste Funktionskomponente 320 zwei Signale bereitstellen, von denen eines lokal verzögert und dann über die erste Signalleitung 215 direkt zur dritten Funktionskomponente 330 übermittelt wird. Das zweite Signal kann zunächst unverzögert über die zweite Signalleitung 220 zur zweiten Funktionskomponente 325 übermittelt werden, wo es in entsprechender Weise verzögert und mittels der dritten Signalleitung 225 an die dritte Funktionskomponente 330 weitergeleitet wird. So können sowohl das erste als auch das zweite Signal der ersten Funktionskomponente 320 um denselben Zeitbetrag verzögert bei der dritten Funktionskomponente 330 eintreffen. Ein zeitlicher Bezug zwischen den Signalen kann erhalten sein. Die zweite Funktionskomponente 325 wirkt dabei nach Art eines Schlüssels. Würde sie weggelassen, so wäre der zeitliche Bezug zwischen den Signalen an der dritten Funktionskomponente 330 gestört und die dritte Funktionskomponente 330 könnte eine vorbestimmte Funktion nicht erbringen.

Die dritte Verschaltung 315 entspricht im Wesentlichen der zweiten Verschaltung 310, mit dem Unterschied, dass die erste Funktionskomponente 320 mit der dritten Funktionskomponente 330 integriert ausgeführt ist. Dementsprechend die erste Signalleitung 215 auf dem Verbindungspfad 210, sie ist durch eine Verbindung innerhalb des Containers 205 ersetzt. Auch hier gilt, dass die integrierte Funktionskomponente 320, 330 nur korrekt arbeiten kann, wenn die zweite Funktionskomponente 325 die vorbestimmte Zeitverzögerung zwischen Signalen auf den Signalleitungen 220, 225 realisiert. Konfigurationen der Container 205 können schlecht auf andere Aufgaben übertragbar sein. Eine Analyse von Signalen auf dem Verbindungspfad 210 kann Funktionen der Funktionskomponenten 320 bis 330 verschleiern.

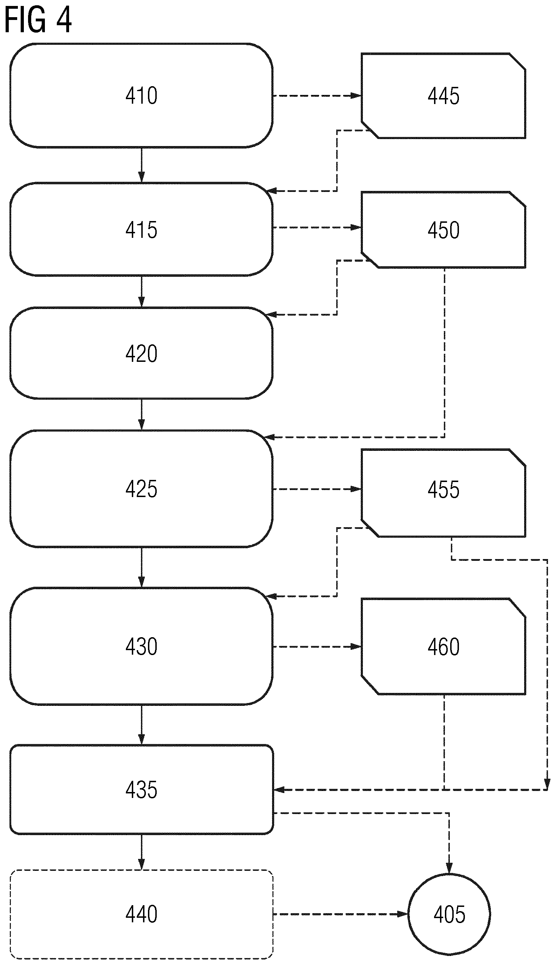

Figur 4 zeigt ein Ablaufdiagramm eines Verfahrens 400 zur Erstellung einer Hardware-Applikation 405 auf der Basis eines partiell rekonfigurierbaren Verarbeitungssystems 100. In einem Schritt 410 kann eine Spezifikation der Hardware-Applikation (HWA) 405 erfasst werden, und eine Konfiguration der Logik 110 kann entworfen werden. Daraus kann ein HWA-Design 445 entstehen.

In einem Schritt 415 kann eine Implementation in RTL-Sprache erfolgen. Dabei kann auf der Basis des HWA-Designs 445 ein RTL-Code 450 für die HWA 405 erstellt werden.

In einem Schritt 420 kann der RTL-Code 450 verifiziert werden. In einem nachfolgenden Schritt 425 kann für die erste Funktionskomponente 320 - ggf. in Kombination mit der dritten Funktionskomponente 330 - eine Zeitverzögerung eingezogen werden, die insbesondere durch eine Verzögerungsschaltung 335 realisiert werden kann. Auf der Basis des RTL-Codes 450 kann ein RTL-Code 455 für die erste bzw. dritte Funktionskomponente 320, 330 erstellt werden.

In entsprechender Weise kann in einem Schritt 430 eine Zeitanpassung in die zweite Funktionskomponente 325 eingefügt werden. Dabei kann eine weitere Verzögerungsschaltung 335 realisiert werden. Daraus kann ein RTL-Code 460 für die zweite Funktionskomponente 325 bereitgestellt werden.

In einem Schritt 435 können die erzeugten RTL-Codes 455 und 460 verifiziert werden, indem sie in einer Verschaltung 305 bis 315 getestet werden. Optional kann in einem Schritt 440 getestet werden, ob eine Äquivalenz besteht zwischen einer Implementation ohne die beiden eingezogenen Verzögerungsschaltungen 335 und der erstellten Implementation mit den Verzögerungsschaltungen 335.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

### Bezugszeichenliste

- 100: Verarbeitungssystem
- 105: Rechensystem
- 110: rekonfigurierbare Logik
- 115: Prozessor
- 120: Verwaltungseinheit
- 125: Speicher
- 130: Systemsteuerung
- 135: Konfigurationseinheit
- 140: Schnittstellen
- 145: Funktionskomponente, Funktionsblock

- 205: Container
- 210: Verbindungspfad
- 215: erste Signalleitung
- 220: zweite Signalleitung
- 225: dritte Signalleitung
- 230: vierte Signalleitung

- 305: erste Verschaltung
- 310: zweite Verschaltung
- 315: dritte Verschaltung
- 320: erste Funktionskomponente
- 325: zweite Funktionskomponente
- 330: dritte Funktionskomponente
- 335: Verzögerungsschaltung

- 405: Hardware-Applikation
- 410: Spezifikation und Entwurf
- 415: RTL Implementation
- 420: RTL Code Überprüfung
- 425: Einzug einer ersten Signalverzögerung
- 430: Einzug einer zweiten Signalverzögerung
- 435: Code Überprüfung
- 440: Test auf Äquivalenz von Implementationen mit und ohne Signalverzögerungen
- 445: HWA Design
- 450: RTL Code
- 455: RTL Code für erste / dritte Funktionskomponente
- 460: RTL Code für zweite Funktionskomponente

## Patentansprüche

1. Verarbeitungssystem (100) mit rekonfigurierbarer Logik (110) ;
- wobei die Logik (110) auf der Basis von Konfigurationsdaten so verschaltet werden kann, dass sich eine erste (320) und eine zweite Funktionskomponente (325) ergibt,
- die mittels einer ersten Signalleitung (215) und einer zweiten Signalleitung (220) miteinander verbunden sind;
- wobei zwischen der ersten Funktionskomponente (320) und der ersten Signalleitung (215) eine erste Verzögerungsschaltung (335) gebildet ist;
- wobei zwischen der zweiten Signalleitung (220) und der zweiten Funktionskomponente (325) eine zweite Verzögerungsschaltung (335) gebildet ist;
- wobei Verzögerungszeiten der Verzögerungsschaltungen (335) gleich sind.

2. Verarbeitungssystem (100) nach Anspruch 1, wobei die Verzögerungsschaltungen (335) dediziert auf der Basis der Konfigurationsdaten gebildet sind.

3. Verarbeitungssystem (100) nach Anspruch 1 oder 2, wobei Funktionen der Funktionskomponenten (320, 325) mittels auf den Signalleitungen (215, 220) übertragenen Signalen aufeinander abgestimmt sind.

4. Verarbeitungssystem (100) nach einem der vorangehenden Ansprüche, wobei eine der Verzögerungsschaltungen (335) mittels einer dritten Funktionskomponente (330) realisiert ist, der mittels Signalleitungen (215, 220) an die erste und die zweite Funktionskomponente (325) angebunden ist.

5. Verarbeitungssystem (100) nach einem der vorangehenden Ansprüche, ferner umfassend einen Speicher (125, 135) für die Konfigurationsdaten; wobei das Verarbeitungssystem (100) dazu eingerichtet ist, die Logik (110) auf der Basis der abgespeicherten Konfigurationsdaten zu konfigurieren.

6. Verarbeitungssystem (100) nach einem der vorangehenden Ansprüche, wobei eine Definition der durch die erste Verzögerungsschaltung (335) bewirkten Verzögerung in den Konfigurationsdaten unabhängig von einer Definition der durch die zweite Verzögerungsschaltung (335) bewirkten Verzögerung ist.

7. Verarbeitungssystem (100) nach einem der vorangehenden Ansprüche, ferner umfassend eine außerhalb der rekonfigurierbaren Logik (110) gebildete programmierbare Verarbeitungseinrichtung (115).

8. Verarbeitungssystem (100) nach Anspruch 6, wobei die Verarbeitungseinrichtung (115) auf einen vorbestimmten Bereich der Logik (110) lesend und/oder schreibend zugreifen kann.

9. Verarbeitungssystem (100) nach einem der vorangehenden Ansprüche, wobei eine Verzögerungsschaltung (335) einen Taktteiler oder einen Taktgenerator umfasst.

10. Verarbeitungssystem (100) nach einem der vorangehenden Ansprüche, wobei das Verarbeitungssystem (100) ein SoC umfasst.

11. Verarbeitungssystem (100) nach einem der vorangehenden Ansprüche, wobei eine Verzögerungsschaltung (335) ein vordefiniertes Logikelement (110) umfasst.

12. Computerprogrammprodukt, umfassend Konfigurationsdaten zur Konfiguration eines Verarbeitungssystems (100) nach einem der vorangehenden Ansprüche.

13. Verfahren zum Synchronisieren einer ersten Funktionskomponente (320) und einer zweiten Funktionskomponente (325) eines Verarbeitungssystems (100) mit rekonfigurierbarer Logik (110) ; wobei die Funktionskomponenten (320, 325) auf der Basis von Konfigurationsdaten aus der Logik (110) verschaltet sind; wobei die Funktionskomponenten(320, 325) mittels einer ersten Signalleitung (215) und einer zweiten Signalleitung (220) miteinander verbunden sind; wobei das Verfahren folgende Schritte umfasst:
- Bereitstellen eines ersten Signals durch die erste Funktionskomponente (320);
- Verzögern des ersten Signals um einen vorbestimmten Betrag;
- Übermitteln des verzögerten ersten Signals mittels der ersten Signalleitung (215) an die zweite Funktionskomponente (325);
- Bereitstellen eines zweiten Signals durch die zweite Funktionskomponente (325), wobei das zweite Signal in einem vorbestimmten zeitlichen Zusammenhang mit dem verzögerten ersten Signal steht;
- Übermitteln des zweiten Signals an die erste Funktionskomponente (320);
- Verzögern des zweiten Signals um denselben vorbestimmten Betrag; und
- Auswerten des verzögerten ersten Signals in Zusammenhang mit dem verzögerten zweiten Signal.
